# EUROPÄISCHE PATENTSCHRIFT

(11) **EP 1 333 123 B1**
(45) Veröffentlichungstag und Bekanntmachung des Hinweises auf die Patenterteilung: **19.10.2005**
(21) Anmeldenummer: 03002132.3
(22) Anmeldetag: 31.01.2003
(51) Int. Cl.: D21G 1/00, F16F 15/02

(54) **Verfahren und Vorrichtung zur aktiven Dämpfung von Schwingungen in einer Vorrichtung zum Bearbeiten einer laufenden Bahn**
Method and device for active damping of vibrations in a device for treating a continuously moving web
Procédé et dispositif d'amortissement actif dans un dispositif de traitement d'une bande en mouvement continu

(30) Priorität: 05.02.2002 DE 10204763
(43) Veröffentlichungstag der Anmeldung: 06.08.2003
(73) Patentinhaber: Eduard Küsters Maschinenfabrik GmbH & Co. KG, 47805 Krefeld (DE)
(72) Erfinder: Hader, Peter, 47906 Kempen (DE); Meitner, Robert, 47809 Krefeld (DE)
(74) Vertreter: Kluin, Jörg-Eden

(56) Entgegenhaltungen:
- EP-A- 0 087 729
- EP-A- 0 319 886
- EP-A- 0 419 826
- WO-A-01/50035
- DE-A- 4 232 920
- DE-A- 19 652 769
- US-A- 3 236 471
- US-A- 3 347 157
- US-A- 5 553 805
- US-A- 6 138 629
- PATENT ABSTRACTS OF JAPAN vol. 017, no. 002 (M-1348), 5. Januar 1993 (1993-01-05) -& JP 04 236819 A (EBARA CORP), 25. August 1992 (1992-08-25)

## Beschreibung

Die Erfindung bezieht sich auf ein Verfahren der dem Oberbegriff des Anspruchs 1, auf eine Walzenanordnung der dem Oberbegriff des Anspruchs 5 sowie auf eine Vorrichtung der dem Oberbegriff des Anspruchs 12 entsprechenden Art.

Die Verwendung von Walzen ist zum Bearbeiten einer laufenden Bahn in vielfältiger Hinsicht bekannt. Als Beispiel sei eine Papiermaschine genannt, in der die Papierbahn einem von zwei gegeneinander wirkenden Walzen gebildeten Bearbeitungsspalt - dem sogenannten Nip - zugeführt wird und beim Durchlaufen des Bearbeitungsspalts eine Druck- und ggf. auch Wärmebehandlung erfährt.

Mit zunehmender Bearbeitungsgeschwindigkeit der Warenbahnen, die einhergeht mit einem Anstieg der Drehzahl der bearbeitenden Walzen kommt es in einer zunehmenden Zahl von Fällen dazu, daß zumindest eine der Walzen während der Bearbeitung zu schwingen beginnt, was zunächst zu einer ungleichmäßigen Oberflächenstruktur der bearbeiteten Bahn und schließlich zur Ausbildung von Bereichen erhöhten Verschleißes am Walzenmantel führt. Letzteres tritt insbesondere dann auf, wenn der Walzenmantel einen weichen Bezug, beispielsweise aus Kunststoff trägt, wie dies heute in Papiermaschinen regelmäßig der Fall ist.

Zur Dämpfung dieser Schwingungen ist es aus der DE 36 39 009 C2 bereits bekannt, bei einer hydraulisch innen abgestützten Walze, d.h. einer Walze mit einem umlaufenden Walzenmantel und einem in einem Maschinengestell gelagerten feststehenden Querhaupt, das die Walzenachse bildet, an welchem gegen den Innenumfang der Hohlwalze wirkende hydraulische Stützeinrichtungen angreifen, Dämpfungseinrichtungen vorzusehen, die mit Hilfe von Reibelementen die Ausbildung von Schwingungen verhindern sollen. Hierzu sind die Dämpfungseinrichtungen an dem über den Lagerbereich nach außen überstehenden Enden des Querhaupts angeordnet.

In der Praxis hat sich gezeigt, daß es zu Betriebsbedingungen der Walze, die üblicherweise nicht vorhersehbar sind, kommen kann, bei denen sich trotz dieser Maßnahme das Bearbeitungsergebnis durch auftretende Schwingungen verschlechtert.

Aus der EP 0 365 800 A1 ist ein Verfahren zur aktiven Dämpfung von Schwingungen an einer Papiermaschine bekannt. Bei diesem Verfahren werden mit Hilfe eines Regelkreises die kinematischen Größen erfaßt und verarbeitet, die Ausdruck der unerwünschten Schwingungen der zu bedämpfenden Struktur sind. Mit diesem Regelkreis wird ein Stellmotor angesteuert, der gemäß einer in der EP 0 365 800 A1 dargestellten Ausführungsform zwischen der schwingungsfähigen Struktur einer Papiermaschine und der Lagerung einer Walze angeordnet ist und über den eine Dämpfungsschwingung eingeleitet wird.

Nachteilig ist bei dieser Vorrichtung, daß die zur Durchführung des in der EP 0 365 800 A1 beschriebenen Verfahrens notwendige Lagerung der Walze über Aktuatoren an dem Maschinengestell Schwierigkeiten bereiten kann, unter anderem deshalb, da sich hier in der Regel ein Schwingungsknoten befindet.

Dokument WO 01/50035 zeigt die Merkmale des Oberbegriffs der Ansprüche 1 und 5.

Der Erfindung liegt daher die Aufgabe zugrunde, ein Verfahren sowie eine zum Durchführen des Verfahrens geeignete Walze und Vorrichtung zur Verfügung zu stellen, um die Ausbildung von Schwingungen bei dem Bearbeiten einer Bahn unter Zusammenwirkung mit dem Arbeitsumfang einer Walze auf einfachem Wege wirksam reduzieren zu können.

Diese Aufgabe wird durch das in Anspruch 1 wiedergegebene Verfahren, in seinem konstruktiven Aspekt durch die in Anspruch 5 wiedergegebene Walzenanordnung und die in Anspruch 12 wiedergegebene Vorrichtung gelöst.

Nach einem Merkmal der Erfindung werden zur aktiven Dämpfung Biegemomente phasenversetzt zu der zu dämpfenden Schwingung in die Achse oder Welle der Walze eingeleitet.

Wenn im Obigen und Folgenden von "Achse oder Welle" die Rede ist, so soll damit zum Ausdruck gebracht werden, daß es sich bei der Walze um eine nicht von außen angetriebene mit einer drehbar oder undrehbar gelagerten "Achse" oder um eine solche handeln kann, bei der ein äußeres Antriebsmoment über ihre drehbar gelagerte "Welle" eingeleitet wird. Unter Welle sind in diesem Zusammenhang auch die Achszapfen einer konventionellen Walze zu verstehen, die an die Stirnseiten des Walzenkörpers angeflanscht sind.

Die Biegemomente werden über zumindest ein über dem Walzenmantel überstehendes Ende der Achse oder Welle der Walze eingeleitet.

Besonders effektiv im Hinblick auf die Dämpfungseffekte ist das erfindungsgemäße Verfahren dann, wenn die Biegemomente mit Abstand in Längsrichtung der Achse oder Welle zu einer Lagerstelle der Achse oder Welle eingeleitet werden.

Die Wirksamkeit kann nochmals dadurch erhöht werden, daß die Biegemomente beidseitig der Lagerstelle der Achse oder Welle eingeleitet werden.

Die Erzeugung der Biegemomente kann vorzugsweise elektrisch, elektromagnetisch, magnetostriktiv, piezoelektrisch, hydraulisch oder pneumatisch erfolgen.

Die erfindungsgemäße Walzenanordnung zeichnet sich u.a. dadurch aus, daß der Angriffsbereich der Einrichtung zur aktiven Dämpfung von Schwingungen an der Achse oder Welle der Walze derart angeordnet ist, daß die Einrichtung zur aktiven Dämpfung von Schwingungen Biegemomente in die Achse oder Welle der Walze einleitet, die zur Schwingung gegenphasig wirken.

Hierzu greift die Einrichtung zur Schwingungsdämpfung zumindest an einem über den Walzenmantel überstehenden Ende der Achse oder Welle der Walze an.

Wegen der mit einem größeren Hebel verbundenen Effektivitätssteigerung ist es bevorzugt, wenn die Einrichtung in Längsrichtung der Achse oder Welle mit Abstand zu einer Lagerstelle der Achse oder Welle an selbiger angreift.

Ebenfalls ist es möglich, daß die Einrichtung beidseitig der Lagerstelle an der Achse oder Welle angreift. Neben einer weiteren Effektivitätssteigerung wird hierdurch bewirkt, daß selbst dann, wenn die aktiv eingeleitete Dämpfungsschwingung nicht in ihrer Frequenz und/oder Phase exakt auf die zu bedämpfende Schwingung abgestimmt ist, die auf die Lagerstelle wirkenden Belastungen reduziert sind.

Die Einrichtung umfaßt vorzugsweise für jede Angriffsstelle zumindest einen Aktuator, der elektrisch, elektromagnetisch, magnetostriktiv, piezoelektrisch, hydraulisch oder pneumatisch arbeitend ausgestaltet sein kann. Besonders bevorzugt ist es, die erfindungsgemäße Walze als durchbiegegesteuerte Walze auszubilden. Denn es hat sich überraschenderweise gezeigt, daß die zu bedämpfende Schwingung des Walzenmantels über die Einleitung von Biegemomenten in das in diesem Falle als Walzenachse dienende Querhaupt gedämpft werden können. Die durchbiegegesteuerte Walze kann insbesondere eine hydraulisch innen abgestützte Walze sein.

Die Erfindung erstreckt sich auch auf eine Vorrichtung zum Bearbeiten einer laufenden Bahn, die eine erfindungsgemäße Walzenanordnung aufweist. Die Vorrichtung kann einen von der Walze und einem Gegenwerkzeug gebildeten Bearbeitungsspalt umfassen, wobei das Gegenwerkzeug wiederum eine Walze sein kann.

Ferner betrifft die Erfindung auch einen Zweiwalzen- oder Mehrwalzenkalander sowie Naßpressen, bei denen zumindest eine der Walzen in der vorgeschriebenen Weise ausgebildet ist.

Im Folgenden soll der Erfindungsgegenstand näher anhand der Zeichnung beschrieben werden, in der Ausführungsbeispiele der Erfindung am Beispiel eines Zweiwalzenkalanders schematisch dargestellt sind. Es zeigen:
- Fig. 1: ein erstes Ausführungsbeispiel der Erfindung an einem Zweiwalzenkalander in einer Aufsicht;
- Fig. 2: ein weiteres Ausführungsbeispiel der Erfindung in einer Fig. 1 entsprechenden Darstellung sowie
- Fig. 3: ein drittes Ausführungsbeispiel der Erfindung in einer Fig. 1 und 2 entsprechenden Darstellung.

Der in der Zeichnung als Ganzes mit 100 bezeichnete Kalander umfaßt eine starre, obere Walze 1, die zwei mit ihr verbundene Walzenzapfen 2 und 3 aufweist, die ihrerseits rotierbar über Lagereinrichtungen 4 und 5 an einem in der Zeichnung nicht dargestellten Maschinengestell gelagert sind.

Die Walze 1 bildet das Gegenwerkzeug zu einer unteren, durchbiegesteuerbar ausgestalteten Walze 6, mit der sie den Bearbeitungsspalt 7 bildet.

Die untere Walze umfaßt als Achse ein undrehbares Querhaupt 8, welches an den Lagerstellen 9 und 10 derart gelagert ist, daß Biegemomente in das Querhaupt 8 einleitbar sind.

Über Lagereinrichtungen 11 und 12 ist drehbar auf dem Querhaupt 8 ein Walzenmantel 13 gelagert, dessen äußere Umfangsfläche mit einem Bezug, beispielsweise aus Kunststoff, versehen sein kann.

Wird ein derartiger Zweiwalzenkalander zur Papierbearbeitung verwendet, so beträgt die Drehzahl der unteren Walze beispielsweise etwa sieben Umdrehungen pro Sekunde. Erfahrungsgemäß können bei dieser Drehfrequenz Schwingungen im Frequenzbereich zwischen 60 und 300 Hz auftreten, die sich nachteilig auf das Bearbeitungsergebnis der durch den Walzenspalt geführten Bahn auswirken und zur Erhöhung des Verschleißes insbesondere eines Bezuges der unteren Walze 6 führen können.

Zur aktiven Dämpfung dieser Schwingungen werden diese mittels eines Schwingungssensors, der beispielsweise mechanisch, elektrisch, elektromagnetisch, magnetisch oder optisch wirken kann, vorzugsweise an einer Stelle, an der eine relativ große Schwingungsamplitude zu erwarten ist (in der Zeichnung nicht dargestellt) in dem Kalander erfaßt und in einer in der Zeichnung ebenfalls nicht dargestellten Steuer- bzw. Regeleinrichtung in zur Ansteuerung von Aktuatoren zum Einleiten von Biegemomenten in das Querhaupt 8 der Walze 6 geeignete Signale umgeformt.

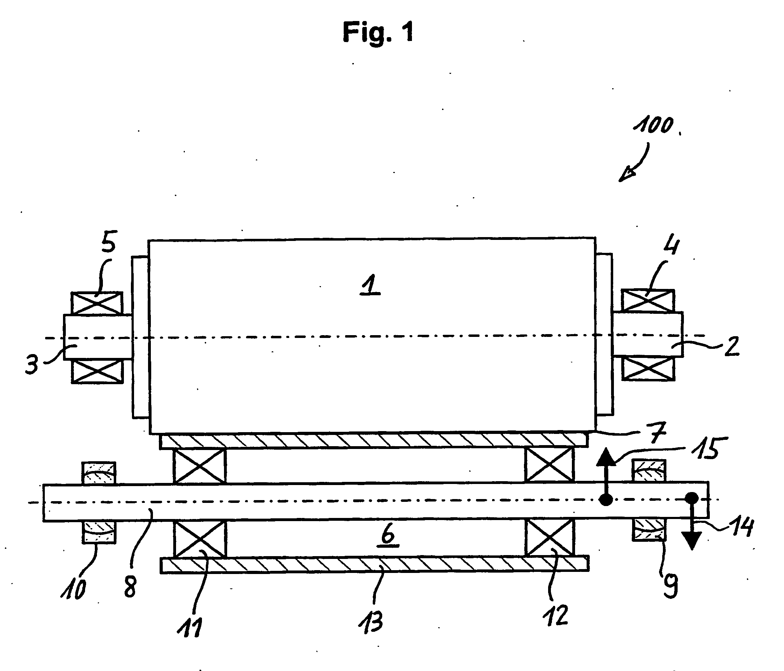

Zur Einleitung der Biegemomente ist in dem Ausführungsbeispiel gemäß Fig. 1 eine im Einzelnen nicht dargestellte Einrichtung vorgesehen, die mit Hilfe von Aktuatoren Biegemomente in das Querhaupt einleiten, die mit den Pfeilen 14 und 15 symbolisiert werden sollen. Die Richtung des jeweiligen Pfeils stellt die Richtung des jeweiligen Biegemoments zu einem bestimmten Zeitpunkt dar. Es versteht sich, daß sich die Richtungen und auch die Größe der Biegemomente periodisch ändern müssen, um zur Dämpfung der Schwingung geeignete Gegenbiegemomente einleiten zu können.

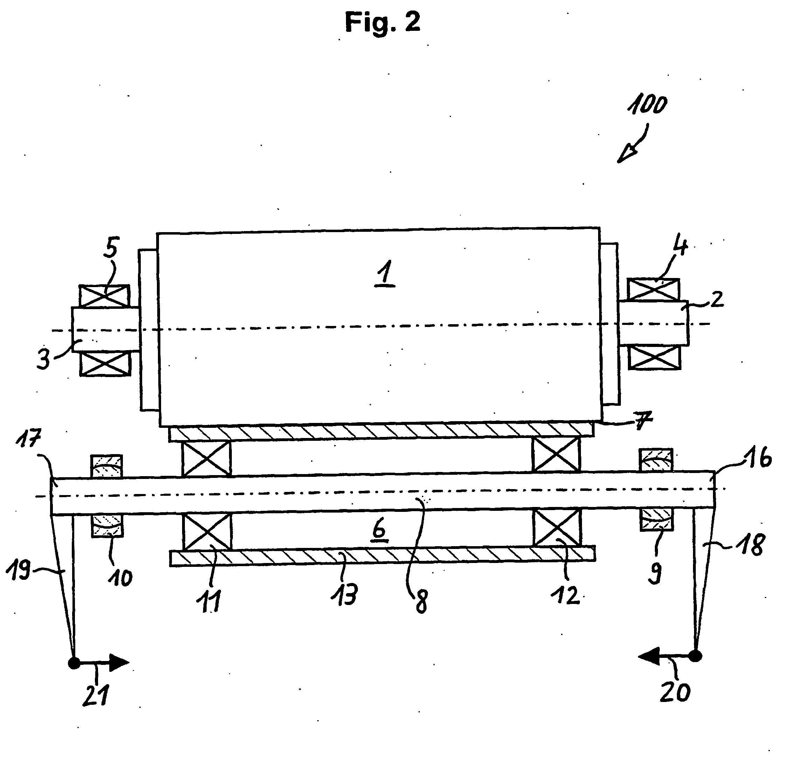

Bei dem in Fig. 2 dargestellten, im Aufbau und der Wirkungsweise - sofern im folgenden nicht erwähnt - demjenigen gemäß Fig. 1 entsprechenden Ausführungsbeispiel werden die Biegemomente über an den Enden 16, 17 des Querhaupts 8 angebrachte, sich rechtwinklig zur Mittellängsachse A des Querhaupts erstreckende Ausleger 18, 19 eingeleitet. An deren in der Zeichnung unten dargestellten Enden sind hierzu nicht erkennbare Aktuatoren angekoppelt, durch die periodische, durch die Pfeile 20, 21 für einen bestimmten Zeitpunkt symbolisierte, sich periodisch ändernde Kräfte einleitbar sind.

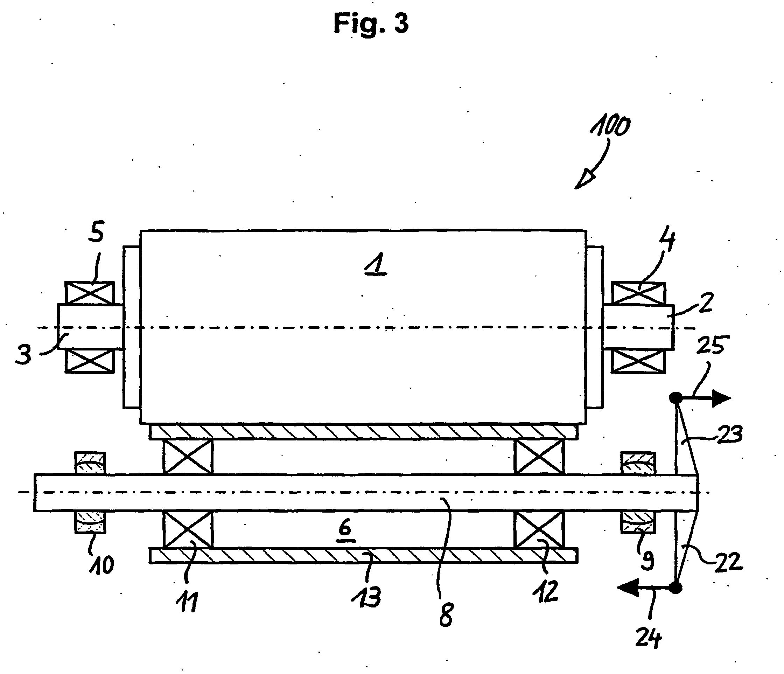

Bei dem in Fig. 3 dargestellten Ausführungsbeispiel wird - wie auch im Ausführungsbeispiel gemäß Fig. 1 - ein Biegemoment nur an dem in der Zeichnung rechts dargestellten Ende des Querhaupts 8 eingeleitet. Hierzu ist dieses Ende des Querhaupts mit zwei einander gegenüberliegenden Auslegern 22, 23 versehen, an deren Enden jeweils eine sich periodisch ändernde Kraft in entgegengesetzter Richtung angreift, wie durch die Pfeile 24, 25 dargestellt werden soll.

Die Erfindung ist keinesfalls auf die Einleitung der Biegemomente in den dargestellten Weisen beschränkt. Es versteht sich, daß auch konstruktiv andere Möglichkeiten und auch Kombinationen der hier beispielhaft dargestellten Anordnungen zur Verwirklichung der Erfindung geeignet sind.

### BEZUGSZEICHENLISTE

- 1: Walze
- 2: Walzenzapfen
- 3: Walzenzapfen
- 4: Lagereinrichtung
- 5: Lagereinrichtung
- 6: Walze
- 7: Bearbeitungsspalt
- 8: Querhaupt
- 9: Lagerstellen
- 10: Lagerstellen
- 11: Lagereinrichtung
- 12: Lagereinrichtung
- 13: Walzenmantel
- 14: Pfeil
- 15: Pfeil
- 16: Ende
- 17: Ende
- 18: Ausleger
- 19: Ausleger
- 20: Pfeil
- 21: Pfeil
- 22: Ausleger
- 23: Ausleger
- 24: Pfeil
- 25: Pfeil

- 100: Kalander
- A: Mittellängsachse

## Patentansprüche

1. Verfahren zur aktiven Dämpfung von Schwingungen in einer Vorrichtung zum Bearbeiten einer laufenden Bahn, bei dem die Bahn mit dem Walzenmantel (13) zumindest einer Walze (6) zusammenwirkt,
wobei die aktive Dämpfung durch phasenversetzt zur Schwingung in die Achse oder Welle (8) der Walze (6) eingeleitete Biegemomente erfolgt,
**dadurch gekennzeichnet,**
**dass** die Biegemomente über zumindest ein über den Walzenmantel (13) überstehendes Ende der Achse oder Welle (8) der Walze (6) eingeleitet werden.

2. Verfahren nach Anspruch 1, **dadurch gekennzeichnet, dass** die Biegemomente mit Abstand in Richtung der Mittellängsachse (A) der Achse oder Welle (8) zu einer Lagerstelle (9) der Achse oder Welle (8) eingeleitet werden.

3. Verfahren nach Anspruch 2, **dadurch gekennzeichnet, daß** beidseitig der Lagerstelle (9) der Achse oder Welle (8) Biegemomente in die Achse oder Welle (8) eingeleitet werden.

4. Verfahren nach einem der Ansprüche 1 bis 4, **dadurch gekennzeichnet, dass** zur Erzeugung der Biegemomente elektrisch, elektromagnetisch, magnetostriktiv, piezoelektrisch, hydraulisch oder pneumatisch betriebene Aktuatoren verwendet werden.

5. Walzenanordnung zur Bearbeitung einer laufenden Bahn, insbesondere für den Einsatz in einer Papiermaschine,
mit einer Walze (6), umfassend einen
Walzenmantel (13) und eine Achse oder Welle (8), und mit einer Einrichtung zur aktiven Dämpfung von Schwingungen der Walze,
**dadurch gekennzeichnet,**
**dass** der Angriffsbereich der Einrichtung der Achse oder Welle (8) der Walze (6) derart gelegen ist, dass die Einrichtung zur Schwingung gegenphasig wirkende Biegemomente in die Achse oder Welle (8) der Walze (6) einleitet, wobei
die Einrichtung an zumindest einem über den Walzenmantel (13) überstehenden Ende der Achse oder Welle (8) der Walze (6) angreift.

6. Anordnung nach Anspruch 5, **dadurch gekennzeichnet, dass** die Einrichtung in Längsrichtung der Achse oder Welle (8) mit Abstand zu einer Lagerstelle (9) der Achse oder Welle (8) eingreift.

7. Walzenanordnung nach Anspruch 6, **dadurch gekennzeichnet, dass** die Einrichtung beidseitig der Lagerstellen (9) an der Achse oder Welle (8) angreift.

8. Walzenanordnung nach einem der Ansprüche 5 bis 7, **dadurch gekennzeichnet, dass** die Einrichtung für jede Angriffsstelle zumindest einen Aktuator umfasst.

9. Walzenanordnung nach Anspruch 8, **dadurch gekennzeichnet, dass** der Aktuator ein auf elektrischem, elektromagnetischem, magnetostriktivem, piezoelektrischem, hydraulischem oder pneumatischem Wege arbeitender Aktuator ist.

10. Walzenanordnung nach einem der Ansprüche 5 bis 9, **dadurch gekennzeichnet, dass** die Walze eine durchbiegegesteuerte Walze ist.

11. Walzenanordnung nach Anspruch 10, **dadurch gekennzeichnet, dass** die Walze (6) eine hydraulisch innen abgestützte Walze ist.

12. Vorrichtung zum Bearbeiten einer laufenden Bahn,
mit mindestens einer Walzenanordnung,
**dadurch gekennzeichnet,**
**dass** die Walzenanordnung die Merkmale eines der Ansprüche 5 bis 11 aufweist.

13. Vorrichtung nach Anspruch 12, **dadurch gekennzeichnet, dass** die Vorrichtung einen von der Walze und einem Gegenwerkzeug gebildeten Bearbeitungsspalt (7) umfaßt.

14. Vorrichtung nach Anspruch 13, **dadurch gekennzeichnet, dass** das Gegenwerkzeug eine Walze (1) ist.

15. Vorrichtung nach Anspruch 14, **dadurch gekennzeichnet, dass** die Vorrichtung ein Zweiwalzenkalander ist.

16. Vorrichtung nach Anspruch 14, **dadurch gekennzeichnet, dass** die Vorrichtung ein Mehrwalzenkalander ist.

17. Vorrichtung nach Anspruch 14, **dadurch gekennzeichnet, dass** die Vorrichtung eine Nasspresse ist.

## Claims

1. Method for the active damping of vibrations in an apparatus for processing a moving web, in which the web interacts with the roll shell (13) of at least one roll (6), the active damping being carried out by bending moments introduced into the axle or shaft (8) of the roll (6) with a phase offset in relation to the vibration, **characterized in that** the bending moments are introduced via at least one end of the axle or shaft (8) of the roll (6) which projects beyond the roll shell (13).

2. Method according to Claim 1, **characterized in that** the bending moments are introduced at a distance from a bearing point (9) of the axle or shaft (8) in the direction of the longitudinal mid-axis (A) of the axle or shaft (8).

3. Method according to Claim 2, **characterized in that** bending moments are introduced into the axle or shaft (8) on both sides of the bearing point (9) of the axle or shaft (8).

4. Method according to one of Claims 1 to 4, **characterized in that**, in order to produce the bending moments, actuators which are operated electrically, electromagnetically, magneto-strictively, piezoelectrically, hydraulically or pneumatically are used.

5. Roll arrangement for processing a moving web, in particular for use in a papermaking machine, having a roll (6) comprising a roll shell (13) and an axle or shaft (8), and having a device for the active damping of vibrations of the roll, **characterized in that** the region of action of the device on the axle or shaft (8) of the roll (6) is placed in such a way that the device introduces bending moments into the axle or shaft (8) of the roll (6) in antiphase with the vibration, the device acting on at least one end of the axle or shaft (8) of the roll (6) projecting beyond the roll shell (13).

6. Roll arrangement according to Claim 5, **characterized in that** the device acts at a distance from a bearing point (9) of the axle or shaft (8) in the longitudinal direction of the axle or shaft (8).

7. Roll arrangement according to Claim 6, **characterized in that** the device acts on the axle or shaft (8) on both sides of the bearing points (9).

8. Roll arrangement according to one of Claims 5 to 7, **characterized in that** the device comprises at least one actuator for each point of action.

9. Roll arrangement according to Claim 8, **characterized in that** the actuator is an actuator that operates in an electrical, electromagnetic, magnetostrictive, piezoelectric, hydraulic or pneumatic way.

10. Roll arrangement according to one of Claims 5 to 9, **characterized in that** the roll is a deflection controlled roll.

11. Roll arrangement according to Claim 10, **characterized in that** the roll (6) is a hydraulically internally supported roll.

12. Apparatus for processing a moving web, having at least one roll arrangement, **characterized in that** the roll arrangement has the features of one of Claims 5 to 11.

13. Apparatus according to Claim 12, **characterized in that** the apparatus comprises a processing nip (7) formed by the roll and an opposing tool.

14. Apparatus according to Claim 13, **characterized in that** the opposing tool is a roll (1).

15. Apparatus according to Claim 14, **characterized in that** the apparatus is a two-roll calender.

16. Apparatus according to Claim 14, **characterized in that** the apparatus is a multi-roll calender.

17. Apparatus according to Claim 14, **characterized in that** the apparatus is a wet press.

## Revendications

1. Procédé pour l'amortissement actif de vibrations dans un dispositif de traitement d'une bande en mouvement continu, dans lequel la bande coopère avec l'enveloppe de rouleau (13) d'au moins un rouleau (6),
l'amortissement actif étant réalisé par des couples de flexion introduits de manière déphasée par rapport à la vibration dans l'axe ou l'arbre (8) du rouleau (6),
**caractérisé en ce que**
les couples de flexion sont introduits par le biais d'au moins une extrémité de l'axe ou de l'arbre (8) du rouleau (6) dépassant de l'enveloppe du rouleau (13).

2. Procédé selon la revendication 1, **caractérisé en ce que** les couples de flexion sont introduits à distance dans la direction de l'axe longitudinal médian (A) de l'axe ou de l'arbre (8) par rapport à un point de support (9) de l'axe ou de l'arbre (8).

3. Procédé selon la revendication 2, **caractérisé en ce que** des couples de flexion sont introduits dans l'axe ou dans l'arbre (8) des deux côtés du point de support (9) de l'axe ou de l'arbre (8).

4. Procédé selon l'une quelconque des revendications 1 à 4, **caractérisé en ce que** l'on utilise des actionneurs électriques, électromagnétiques, magnétostrictifs, piézoélectriques, hydrauliques ou pneumatiques pour la production des couples de flexion.

5. Agencement de rouleau pour le traitement d'une bande en mouvement continu, notamment pour l'utilisation dans une machine à papier,
comprenant un rouleau (6), comprenant une enveloppe de rouleau (13) et un axe ou un arbre (8), et comprenant un dispositif pour l'amortissement actif de vibrations du rouleau, **caractérisé en ce que** la zone d'intervention du dispositif de l'axe ou de l'arbre (8) du rouleau (6) est placée de telle sorte que le dispositif introduise des couples de flexion agissant en opposition de phase par rapport à la vibration dans l'axe ou l'arbre (8) du rouleau (6),
le dispositif intervenant sur au moins une extrémité de l'axe ou de l'arbre (8) du rouleau (6) dépassant de l'enveloppe du rouleau (13).

6. Agencement selon la revendication 5, **caractérisé en ce que** le dispositif vient en prise dans la direction longitudinale de l'axe ou de l'arbre (8) à distance d'un point de support (9) de l'axe ou de l'arbre (8).

7. Agencement de rouleau selon la revendication 6, **caractérisé en ce que** le dispositif intervient sur l'axe ou l'arbre (8) des deux côtés des points de support (9).

8. Agencement de rouleau selon l'une quelconque des revendications 5 à 7, **caractérisé en ce que** le dispositif comprend pour chaque point d'attaque au moins un actionneur.

9. Agencement de rouleau selon la revendication 8, **caractérisé en ce que** l'actionneur est un actionneur fonctionnant de manière électrique, électromagnétique, magnétostrictive, piézoélectrique, hydraulique ou pneumatique.

10. Agencement de rouleau selon l'une quelconque des revendications 5 à 9, **caractérisé en ce que** le rouleau est un rouleau commandé en flexion.

11. Agencement de rouleau selon la revendication 10, **caractérisé en ce que** le rouleau (6) est un rouleau supporté hydrauliquement à l'intérieur.

12. Dispositif de traitement d'une bande en mouvement, comprenant au moins un agencement de rouleau,
**caractérisé en ce que**
l'agencement de rouleau présente les caractéristiques de l'une des revendications 5 à 11.

13. Dispositif selon la revendication 12, **caractérisé en ce que** le dispositif comprend une fente de traitement (7) formée par le rouleau et un outil conjugué.

14. Dispositif selon la revendication 13, **caractérisé en ce que** l'outil conjugué est un rouleau (1).

15. Dispositif selon la revendication 14, **caractérisé en ce que** le dispositif est une calandre à deux rouleaux.

16. Dispositif selon la revendication 14, **caractérisé en ce que** le dispositif est une calandre à plusieurs rouleaux.

17. Dispositif selon la revendication 14, **caractérisé en ce que** le dispositif est une presse humide.
